# EUROPEAN PATENT APPLICATION

(11) **EP 4 567 705 A1**
(43) Date of publication of application: **11.06.2025**
(21) Application number: 23847862.2
(22) Date of filing: 27.12.2023
(51) Int. Cl.: G06Q 20/38, G06Q 10/1093, G06Q 40/04, G06Q 30/06

(54) **NFT MARKETPLACE SYSTEM**

(30) Priority: 03.10.2023 JP 2023172093
(71) Applicant: Bilizen Co., Ltd., Chiyoda-ku Tokyo 1020082 (JP)
(72) Inventor: TADA, Yusaku, Kyoto-shi, Kyoto 606-8302 (JP)
(74) Representative: Dehns
(86) International application number: PCT/JP2023/046851
(87) International publication number: WO 2025/074654

(57) **Abstract**

To provide an NFT marketplace system that ensures both the speed, certainty, and transparency of NFT transactions, and user privacy.

The NFT marketplace system includes a server connecting to a user terminal via the Internet, a database connected to the server, and a wallet provider configured to be able to read data from and write data to a blockchain including a plurality of nodes, in which the server is configured to be able to conduct a transaction of an NFT created in advance, information to be made public of the NFT being recorded on the blockchain, information to be disclosed to limited people of the NFT is registered on the database in association with the token ID of the NFT, and the server is configured to, when a user has connected to the server using the user terminal and purchased the NFT, record the trading history of the NFT as the information to be made public on the blockchain via the wallet provider, and display the information to be disclosed to limited people registered on the database on the user terminal of the user who has purchased the NFT.

## Description

### [Technical Field]

The present invention relates to a system for implementing an NFT marketplace, and more specifically, to an NFT marketplace system that ensures both the transparency of transactions of NFTs (Non-Fungible Tokens) and user privacy.

### [Background Art]

In recent years, NFT marketplaces for conducting transactions of NFTs (Non-Fungible Tokens) on the Internet have been developed using the public blockchain technology, as disclosed in PTLs 1 and 2.

In such an NFT marketplace, information (e.g., user's wallet address, NFT details, and sales price) necessary for NFT transactions is disclosed, and transactions are executed directly between users according to an automated execution program (i.e., Smart contract) built on a public blockchain.

The trading history of such NFT transactions is recorded on an unspecified number of computers participating in the public blockchain. Thus, it would be extremely difficult to falsify or delete the trading history. Further, anyone can freely view the trading history as well as the information necessary for the NFT transactions.

Therefore, with the NFT marketplace that utilizes the public blockchain technology, it is possible to allow small-scale transactions to be directly conducted between individuals while ensuring the speed, certainty, and transparency of the transactions.

### [Citation List]

### [Patent Literature]

[PTL 1]
   Japanese Patent Laid-Open No. 2023-000072
[PTL 2]
   Japanese Patent No. 7180943

### [Summary of Invention]

### [Technical Problem]

Meanwhile, since the NFT marketplace that utilizes the public blockchain technology allows anyone to freely view the information necessary for NFT transactions and their trading history, and the trading history is difficult to be deleted as described above, the NFT marketplace is not suitable for disclosing users' private information (e.g., real names, schedules, contact information, and other information related to personal privacy).

However, depending on the nature of a transaction, such as the purchase and sale of an NFT involving the provision of a service, for example, it may be necessary to provide private information to the other party. In such cases, conventionally, the parties to the transaction must provide personal information, such as contact information, on a website (i.e., off-chain) different from the NFT marketplace where the NFT transaction is conducted, or set up schedules individually, which is time-consuming and cumbersome. Further, providing private information to an individual user who is a complete stranger at individual's discretion would not ensure the certainty of the transaction and is unfavorable from a safety aspect.

In view of the foregoing circumstances, an object of the present invention is to provide an NFT marketplace system that ensures both the speed, certainty, and transparency of NFT transactions, and user privacy.

### [Solution to Problem]

The present invention has been made to solve the foregoing problems of the conventional art, and the NFT marketplace system of the present invention includes those with the following configurations.
[1] An NFT marketplace system including:
   a server connecting to a user terminal via an Internet;
   a database connected to the server; and
   a wallet provider configured to be able to read data from and write data to a blockchain including a plurality of nodes,
   in which:
      the server is configured to be able to conduct a transaction of an NFT created in advance, information to be made public of the NFT being recorded on the blockchain,
      information to be disclosed to limited people of the NFT is registered on the database in association with a token ID of the NFT, and
      the server is configured to, when a user has connected to the server using the user terminal and purchased the NFT: record a trading history of the NFT as the information to be made public on the blockchain via the wallet provider, and
      display the information to be disclosed to limited people registered on the database on the user terminal of the user who has purchased the NFT only when the user who has purchased the NFT has completed a payment procedure on a payment screen displayed on the user terminal at the purchase of the NFT, and the wallet provider that has confirmed the trading history of the NFT registered on the blockchain has returned a result that a purchase process for the NFT is complete.
[2] The NFT marketplace system according to [1], in which the information to be disclosed to limited people contains appointment-related information including at least potential dates and times.
[3] The NFT marketplace system according to [2], in which the server is configured to, when the user who has purchased the NFT selects a date and a time from among the potential dates and times displayed on the user terminal of the user who has purchased the NFT, registers the selected date and time on the database in association with the token ID of the NFT.

### [Advantageous Effects of Invention]

According to the present invention, it is possible to, when a transaction is conducted in an NFT marketplace, ensure both the transparency of the NFT transaction and user privacy by recording only the information to be made public for the transparency of the NFT transaction, such as the information necessary for the transaction and its trading history, on the public blockchain, and recording users' private information, which should be shared only between the parties to the transaction, on an off-chain.

Further, NFT transactions and the exchange of private information are allowed to be conducted in the same NFT marketplace, so that the time and effort required for users can be reduced.

### [Brief Description of Drawing]

[Fig. 1]

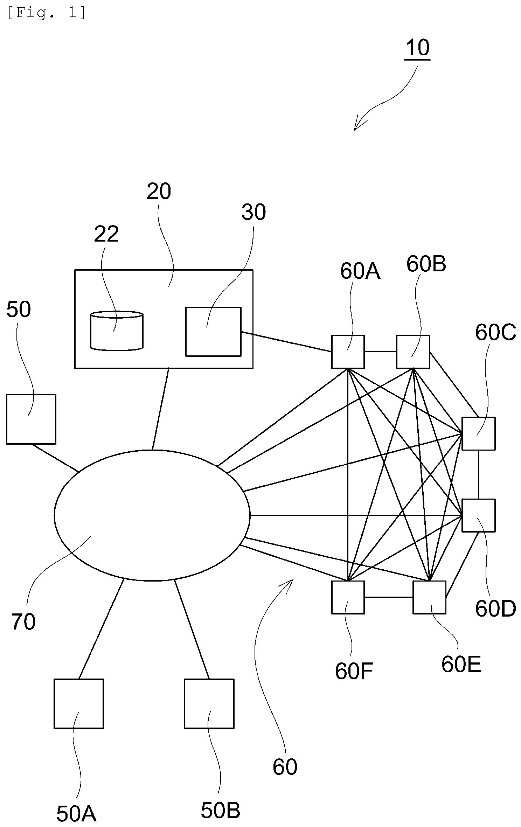

Fig. 1 is a schematic view illustrating the configuration of an NFT marketplace system of this embodiment.

### [Description of Embodiment]

Hereinafter, an embodiment (or an example) of the present invention will be described in more detail based on the drawings.

Note that in this specification, a person who manages the NFT marketplace system shall be referred to as a "service administrator," persons who view the information necessary for a transaction and its trading history using the NFT marketplace system shall be referred to as "viewers," and among such viewers, an advisee and an advisor who conduct NFT transactions shall be referred to generically as "users."

In this specification, "information to be made public" refers to information that can be viewed by any viewer connected to the Internet, and "information to be disclosed to limited people" refers to information that can be viewed only by users who are the parties to an NFT transaction, and further, "information not to be made public" refers to information that can be viewed only by a user who has registered the information. Note that some of the "information to be disclosed to limited people" and the "information not to be made public" are also preferably allowed to be viewed by the service administrator if such information is necessary for the management of the NFT marketplace.

Fig. 1 is a schematic view illustrating the configuration of the NFT marketplace system in this embodiment. As illustrated in Fig. 1, an NFT marketplace system 10 of this embodiment includes a server 20 connecting to a viewer terminal 50 and to user terminals 50A and 50B via the Internet 70.

The server 20 is an off-chain server with the functions of a web server, a mail server, a calendar server, a web conference server, and a file server, for example. The server 20 includes one or more computers.

The server 20 includes a database 22. The database 22 has recorded thereon users' private information entered by users on websites, information on a master meeting agreement entered by an advisor on a website, and information necessary for transactions as well as their trading history acquired from a blockchain 60, as described below.

The server 20 also includes a provider 30. The provider 30 is configured to be able to read data from and write data to the blockchain 60 including a plurality of nodes 60A to 60F, and exchanges data with an off-chain Network (i.e., the Internet 70) side and with a blockchain Network (i.e., the blockchain 60).

Note that it is acceptable as long as the provider 30 is configured to be able to read data from and write data to the blockchain 60. The provider 30 may be configured as a node of the blockchain 60 or may not function as a node.

Each of the nodes 60A to 60F of the blockchain 60 is configured to perform peer-to-peer communication with another node to exchange data therewith. At least one of the nodes (hereinafter referred to as "Full nodes") among the nodes 60A to 60F has recorded thereon the entirety of the information necessary for an NFT transaction conducted with the NFT marketplace system 10 as well as its trading history. Nodes (hereinafter referred to as "SPV nodes") other than the Full nodes have recorded thereon only part of the information necessary for the transaction as well as its trading history. Note that such nodes 60A to 60F are computers. It is acceptable as long as a plurality of nodes are provided, and the number of the nodes is not limited to a particular number. Although such a blockchain 60 is not limited to a particular blockchain, it is possible to use a public blockchain, such as Ethereum, for example.

Note that some of the functions of the mail server, the calendar server, the web conference server, the file server, the database 22, and the provider 30 may not be implemented on the server 20, but may be configured to use external services with similar functions, such as Gmail (registered trademark), Google Calendar (registered trademark), Google Meet (registered trademark), web3.storage, MetaMask, and Alchemy, for example.

The viewer terminal 50 and the user terminals 50A and 50B are terminals that are respectively used by a viewer and users who are connected to the NFT marketplace system 10 of this embodiment via the Internet 70. For example, smartphones, tablet computers, or personal computers can be used as such terminals.

Such an NFT marketplace system 10 of this embodiment is configured to operate as follows.

Although this embodiment illustrates an example in which a service to be provided by an advisor to an advisee through a meeting using a web conference system is created as a commercial product in the form of an NFT, and the NFT is offered for sale with the NFT marketplace system 10, and then, the advisee who has purchased the NFT is provided with the service, the present invention is not limited thereto, and can be used for various other NFT transactions.

<Registration of advisee as user>

The advisee who is a user registers his/her user account to purchase NFTs utilizing the NFT marketplace system 10, using the user (advisee) terminal 50A.

Specifically, the advisee connects to the server 20 using the user terminal 50A, and enters the advisee's information, such as the real name, the date of birth, postal code, postal address, e-mail address, telephone number, and payment method, on a displayed website, for example. The advisee's information entered on the website is registered on the database 22 as the information not to be made public so that the information is stored in a non-disclosed state to those other than the advisee and the service administrator.

Note that when an external service is used for one or more of the functions of the mail server, the calendar server, and the web conference server, for example, an account for the external service is also preferably entered as the advisee's information so that authentication for the use of the external service is conducted in advance.

Examples of the information on the payment method include a wallet address; information on a credit card, a debit card, or the like; an administrative account of an external payment service (e.g., Google Pay (registered trademark) or Apple Pay (registered trademark)); and an administrative account of an exchangeable point service (e.g., Rakuten Point (registered trademark) or d POINT (registered trademark)).

The NFT marketplace may also be configured to issue its own points to allow the advisee to use such own points for his/her payment method. In such a case, the own points may be provided upon purchase of an NFT, or the advisee may be allowed to purchase the own points in advance.

### <Registration of advisor as user and Registration of Products>

The advisor who is a user registers his/her user account as well as products to sell NFTs utilizing the NFT marketplace system 10, using the user (advisor) terminal 50B.

Specifically, the advisor connects to the server 20 using the user terminal 50B, and enters the advisor's information, such as a postal code, postal address, **e-**mail address, telephone number, and money transfer destination, on a displayed website, for example. The advisor's information entered on the website is registered on the database 22 as the information not to be made public so that the information is stored in a non-disclosed state to those other than the advisor and the service administrator.

Note that when an external service is used for one or more of the functions of the mail server, the calendar server, and the web conference server, for example, an account for the external service is also preferably entered as the advisor's information so that authentication for the use of the external service is conducted in advance.

Note that since the advisor is a service provider, strict identification of the advisor is preferably conducted. To this end, the service administrator preferably identifies the advisor by using an online identification system, such as eKYC (Electronic Know Your Customer), or by making a telephone call or sending a telegram or a recipient limited mail, for example, to the advisor based on the entered advisor's information.

For registration of products, the advisor enters information on a master meeting agreement, such as the real name, the theme of a meeting, the conceptual image, the sales price, the duration of the meeting, the deadline for the meeting, and the sales period, and appointment-related information, such as the potential dates and times of the meeting, on the website using the user terminal 50B. The information on the master meeting agreement entered on the website is registered on the database 22 as the information to be made public, and part of the information is transmitted to the provider 30 from the server 20 so as to be recorded on the blockchain 60 via the provider 30 and be tokenized into an NFT.

Meanwhile, the appointment-related information entered on the website is registered only on the database 22 as the information to be disclosed to limited people. In such a case, the information on the master meeting agreement and the appointment-related information are registered on the database 22 in association with each other.

### <Sale of Products>

The NFT created in the foregoing manner is published on a website displayed when the viewer terminal 50 and the user terminals 50A and 50B are connected to the server 20.

To reduce the fee (so-called "gas fee") generated with the creation of an NFT and reduce processing delays, it is also possible to display on the website the information on the master meeting agreement registered on the database 22 without recording it on the blockchain 60 from the server 20 via the provider 30, and, at the completion of a purchase process for the NFT described below, record only the trading history of the NFT transaction on the blockchain 60 via the provider 30.

### <Purchase of Products>

The advisee connects to the server 20 using the user terminal 50A, and selects an NFT to be purchased from among the NFTs published on the displayed website. In such a case, information on a master meeting agreement is displayed for each NFT on the website. Thus, the advisee is able to select an NFT to be purchased while confirming the information on the master meeting agreement. Note that the information on the master meeting agreement displayed on the website may display the information registered on the database 22, and may also display the data recorded on the blockchain 60 and acquired via the provider 30.

Once the NFT to be purchased is determined, a payment screen is displayed on the website so that the advisee completes the payment procedure in accordance with the displayed payment screen. Note that in the payment procedure, it is possible to use information on a payment method registered in advance, or enter additional information on a new payment method so that the added information on the new payment method may be used hereafter.

Note that when an NFT is purchased, once the advisee completes his/her payment procedure on the payment screen displayed on the website, the server 20 sends a request to perform the NFT purchase process to the blockchain 60 via the provider 30 so that the NFT purchase process is performed in accordance with Smart contract implemented on the blockchain 60.

Upon completion of the NFT purchase process, trading history, such as the wallet addresses of the parties (i.e., the advisee and the advisor) to the transaction, the token ID for identifying the NFT, the name (i.e., Contract Address) of the NFT marketplace where the NFT has been purchased, and the date and time of the purchase, is added to the blockchain 60.

Note that when the server 20 is configured to, upon completion of the NFT purchase process, record only its trading history on the blockchain 60 via the provider 30, the wallet address of the advisor is not recorded on the blockchain 60 until the purchase process is completed.

Note also that when a payment method other than Crypto Asset, such as a credit card, is used, it follows that NFTs are purchased using a payment service. In such a case, not only the wallet addresses of the parties to the transaction but also the wallet address of the payment service company is recorded on the blockchain 60.

### <Fixation of Schedule>

The server 20 periodically confirms the NFT purchase status with the provider 30. When requested to confirm the NFT purchase status from the server 20, the provider 30 confirms the NFT recorded on the blockchain 60 to see if the purchase process for the NFT has been completed, and then returns the results to the server 20.

The server 20 displays a schedule selection screen on the website for the advisee only when the advisee has completed his/her payment procedure on the payment screen displayed on the website and the provider 30 has returned the results that the NFT purchase process is complete.

The schedule selection screen displays appointment-related information including the potential dates and times of a meeting registered on the database 22 so that the advisee selects one date and time of the meeting that he/she likes from among the displayed potential dates and times of the meeting. The selected date and time of the meeting are registered on the database 22 in association with the token ID of the NFT. Accordingly, the date and time of the meeting (i.e., appointment) are fixed.

When the date and time of the meeting are fixed, the server 20 registers the fixed date and time of the meeting as well as the URL for a web conference on the calendars of the advisee and the advisor implemented with the function of the calendar server. In addition, the server 20 sends an e-mail, which contains the fixed date and time of the meeting as well as the URL for the web conference, to each of the e-mail addresses of the advisee and the advisor, using the function of the mail server.

Note that the server 20 is preferably configured to, when the schedule selection screen is closed, such as when the advisee has closed his/her browser before the date and time of the meeting are fixed, for example, display the appointment-related information to allow for the selection of a schedule at the time point when the advisee views a website again using the user terminal 50A.

When the advisee purchases an NFT using a payment method other than Crypto Asset, such as a credit card, and thus needs to once move to a website of an external service, it would be impossible to display the schedule selection screen in synchronization with the completion of the purchase process for the NFT. Thus, as in the foregoing case, the server 20 is preferably configured to display the appointment-related information to allow for the selection of a schedule at the time point when the advisee views a website again using the user terminal 50A after the completion of the purchase process for the NFT.

For example, when the NFT owned by the advisee is displayed on a website that is displayed when the advisee connects to the server 20 using the user terminal 50A, but when the database 22 does not have the fixed date and time of the meeting registered thereon in association with the token ID of the NFT, the server 20 may be configured to display on the website the link for displaying the appointment-related information to allow for the selection of a schedule. In such a case, the server 20 needs to be configured to acquire information on the owner of the NFT recorded on the blockchain 60 via the provider 30, and confirm if the advisee is the owner of the NFT on the blockchain 60.

The server 20 may also be configured to send an e-mail reminder to each of the e-mail addresses of the advisee and the advisor using the function of the mail server when the fixed date and time of the meeting are coming closer.

Note that the server 20 may also be configured to display on a website a message screen for the advisee and the advisor to exchange messages. Specifically, the server 20 may be configured to register on the database 22 a message entered by the advisee on the message screen, and also display the message on a website that is displayed when the advisor connects to the server using the user terminal 50B.

### <Meeting>

The advisee and the advisor connect to the server 20 by opening the URL for the web conference on their browsers, for example, using their respective user terminals 50A and 50B at the fixed date and time of the meeting. Then, the server 20 allows the user terminal 50A and the user terminal 50B to exchange audio or video using the function of the web conference server. Note that the user terminal 50A and the user terminal 50B may be configured to communicate with each other via the server 20, or perform peer-to-peer communication.

The advisor holds the meeting with the advisee through the thus prepared web conference.

Note that the server 20 may also be configured to, after the fixed date and time of the meeting, add information to the effect that the meeting is over in association with the token ID of the NFT recorded on the blockchain 60 via the provider 30, and also register the information to the effect that the meeting is over in association with the information on the master meeting agreement registered on the database 22.

As described above, the NFT marketplace system 10 is configured such that the users' private information, which should be shared only between the parties to the transaction, is recorded only on the off-chain database 22, while the information to be made public, such as the information necessary for the transaction and its trading history, is recorded on the database 22 as well as the blockchain 60. This ensures both the speed, certainty, and transparency of NFT transactions, and user privacy without increasing the time and effort for users.

Although the preferred embodiment of the present invention has been described above, the present invention is not limited thereto, and can be changed in various ways without departing from the object of the present invention.

### [Reference Signs List]

- 10: NFT marketplace system
- 20: server
- 22: database
- 30: wallet provider
- 50: viewer terminal
- 50A: user (advisee) terminal
- 50B: user (advisor) terminal
- 60: blockchain
- 60A: node
- 60B: node
- 60C: node
- 60D: node
- 60E: node
- 60F: node
- 70: Internet

## Claims

1. An NFT marketplace system comprising:
a server connecting to a user terminal via an Internet;
a database connected to the server; and
a wallet provider configured to be able to read data from and write data to a blockchain including a plurality of nodes,
wherein:
the server is configured to be able to conduct a transaction of an NFT created in advance, information to be made public of the NFT being recorded on the blockchain,
information to be disclosed to limited people of the NFT is registered on the database in association with a token ID of the NFT, and
the server is configured to, when a user has connected to the server using the user terminal and purchased the NFT: record a trading history of the NFT as the information to be made public on the blockchain via the wallet provider, and
display the information to be disclosed to limited people registered on the database on the user terminal of the user who has purchased the NFT only when the user who has purchased the NFT has completed a payment procedure on a payment screen displayed on the user terminal at the purchase of the NFT, and the wallet provider that has confirmed the trading history of the NFT registered on the blockchain has returned a result that a purchase process for the NFT is complete.

2. The NFT marketplace system according to claim **1,** wherein the information to be disclosed to limited people contains appointment-related information including at least potential dates and times.

3. The NFT marketplace system according to claim **2,** wherein the server is configured to, when the user who has purchased the NFT selects a date and a time from among the potential dates and times displayed on the user terminal of the user who has purchased the NFT, register the selected date and time on the database in association with the token ID of the NFT.
